# EUROPÄISCHE PATENTANMELDUNG

(11) **EP 0 705 633 A1**
(43) Veröffentlichungstag der Anmeldung: **10.04.1996**
(21) Anmeldenummer: 95115046.5
(22) Anmeldetag: 25.09.1995
(51) Int. Cl.: B01D 46/22

(54) **Entstaubungsanlage**

(30) Priorität: 07.10.1994 CH 3025/94
(71) Anmelder: Brändle Metallbau AG, CH-9607 Mosnang (CH)
(72) Erfinder: Brändle, Ruedi, CH-9607 Mosnang (CH)
(74) Vertreter: Révy von Belvárd, Peter

(57) **Zusammenfassung**

Bei Arbeiten in Eisenbahntunnels werden gesundheitsschädliche Staubkonzentrationen vermieden indem eine Entstaubungsvorrichtung (1) mit einem Bandfilter (21) als Vorfilter (2) eingesetzt wird. Der mit Filterpatronen (35) versehene Hauptfilter (3) muss lediglich einen kleinen vom Vorfilter (2) nicht zurückgehaltenen Feinstaubanteil zurückhalten. Durch die Verwendung eines Bandfilters (21) als Vorfilter (2) können sehr lange Betriebszeiten mit einwandfreier Reinigungsleistung gewährleistet werden.

## Beschreibung

Die Erfindung bezieht sich auf eine Entstaubungsanlage nach dem Anspruch 1.

Bei Arbeiten, die Staub freisetzten, erreichen die Staubkonzentrationen in zumindest teilweise abgeschlossenen Arbeitsbereichen, wie etwa in Tunnels oder in Arbeitsräumen, schnell Werte, die gesundheitsschädlich sind. In Eisenbahntunnels wird etwa beim Geleisebau, bei der Schotterreinigung und bei Profilerweiterungen Staub freigesetzt, der sich nur langsam setzt und/oder bei Zugsdurchfahrten, etwa auf einem zweiten Gleis, immer wieder aufgewirbelt wird.

Zur Verhinderung von Staublungenerkrankungen dürfen Konzentrations-Grenzwerte nicht überschritten werden, bzw. sollte der Staubanteil in der Atemluft so klein wie möglich gehalten werden. Dazu kann die Luft etwa entstaubt, oder aber mit zugeführter Frischluft verdünnt, bzw. ersetzt, werden. Zur Entstaubung sind beispielsweise Gesichtsmasken mit Filtern bekannt. Da die Gesichtsmasken und der Staub die Sicht der maskentragenden Personen beeinträchtigen und in Tunnels aufgrund der eingeschränkten Licht- und Raumverhältnisse die Arbeit bereits erschwert ist, muss versucht werden die Staubkonzentration im gesamten Arbeitsbereich zu senken. Dazu werden gemäss dem Stande der Technik Ventilatoren im Tunnel angebracht, um die mit Staub verschmutzte Luft vom Arbeitsbereich weg durch die eine Tunnelöffnung auszublasen, bzw. Frischluft von der anderen Tunnelöffnung anzusaugen. Es hat sich aber gezeigt, dass insbesondere bei grossen Tunnels der Ventilationsaufwand sehr gross ist. Zudem wird ein Teil des Staubes im Tunnel zurückgehalten, insbesondere wird etwa bei Zugsdurchfahrten, die in zweispurigen Tunnels auch während der Arbeit möglich sind, Staub zumindest teilweise wieder in den Arbeitsbereich zurückgeführt und/oder wieder aufgewirbelt. Der Staub wird nur verlagert.

Aus Werkstätten mit stauberzeugenden Produktionsschritten sind Entstaubungsanlagen bekannt in denen Staub mit Filterelementen aus der Raumluft ausgefiltert, bzw. zurückgehalten wird. Da der Staub, zumindest im Nahfeld der Arbeitsmaschine ein breites Kornspektrum umfasst, sind zuweilen verschieden feine Filterelemente, insbesondere ein grobporiges auswechselbares Vorfilter und feinporige Hauptfilter vorgesehen. Im Vorfilter werden die grossen Staubanteile zurückgehalten und im Hauptfilter wird mit, vorzugsweise abreinigbaren, feinstporigen Filtern der Feinanteil des Staubes zurückgehalten. Ein Einsatz der bekannten Entstaubungsanlagen ist in Tunnels nicht vorteilhaft, weil der Vorfilter aufgrund eines hohen Anteils an Grobteilchen und den nötigen hohen Luftdurchsätzen, von beispielsweise über 10'000 m³/h, schnell verstopft ist und ein Auswechseln des Vorfilters aufwendig ist. Die Entstaubungsanlage muss aus dem Tunnel ins Freie geführt werden, wo die für das Auswechseln nötigen Platzverhältnisse vorhanden sind. Weil Arbeiten in Tunnels die Benützbarkeit des Tunnels einschränken, müssen sie so schnell wie möglich ausgeführt werden. Arbeitsunterbrüche zum Filterwechseln sind unerwünscht. Es wird vielmehr verlangt, dass die Arbeit im ununterbrochenen Schichtbetrieb durchgeführt werden kann.

Die erfindungsgemässe Aufgabe besteht nun darin, eine Entstaubungsanlage zu beschreiben, die bei grossen Luftdurchsätzen ohne Filterwechsel über lange Zeit effizient betrieben werden kann.

Die erfindungsgemässe Lösung sieht vor, dass der Vorfilter als Bandfilter ausgebildet ist und ein Filterband, vorzugsweise von einer Vorratsrolle auf eine Aufnahmerolle, quer zum Luftstrom, insbesondere horizontal, im Vorfilter durch diesen Luftstrom bewegbar ist. Im Filterband des Vorfilters wird ein wesentlicher Anteil des grosskörnigen Staubanteils festgehalten. Wenn etwa ein Abschnitt des Filterbandes mit Staub beladen ist, ist das Filterband lediglich um die Länge dieses Abschnittes zu verschieben, bzw. auf die Aufnahmerolle aufzuwickeln, um wieder einen frischen Abschnitt des Filterbandes im Luftstrom zu plazieren. Die Entstaubung muss dabei nicht unterbrochen werden. Erst wenn die ganze Vorratsrolle des Filterbandes abgewickelt ist, muss eine neue Vorratsrolle eingesetzt werden. Da Vorratsrollen mit langen Filterbändern verwendet werden können, sind sehr grosse unterbruchsfreie Betriebsphasen möglich.

Zum Verschieben des Filterbandes können verschiedene Vorgehensweisen und die entsprechenden Vorrichtungsteile verwendet werden. Im einfachsten Fall wird das Filterband manuell verschoben, wenn eine zu hohe Verschmutzung des Filterbandabschnittes im Luftstrom optisch oder aufgrund einer verminderten Durchsatzleistung erkannt wird. Vorzugsweise wird ein Antrieb zum Vorschieben des Filterbandes vorgesehen. Der Antrieb kann das Filterband kontinuierlich oder intermittierend, bzw. abschnittweise vorschieben. Beim intermittierenden Betrieb wird das Filterband jeweils um eine Länge, die im wesentlichen der Ausdehnung des Luftstromes in der Längsrichtung des Filterbandes entspricht, verschoben. Der Vorschub erfolgt in vorgegebenen Zeitabschnitten, oder aber vorzugsweise jeweils beim Erreichen eines vorgegebenen Verstopfungsgrades.

Eine gegebenenfalls vorgesehene Filterband-Vorschubsteuerung umfasst mindestens einen Drucksensor, vorzugsweise einen Differenzdruck-Sensor, der eine Grösse bestimmbar macht, die vom Druckabfall im Luftstrom über das Filterband abhängt. Mit einer Vergleichsstufe können die vom Sensor ermittelten Werte mit mindestens einem vorgegebenen Wert verglichen werden. Liegt der Druckabfall über einem oberen Grenzwert, so ist die Verstopfung des benützten Filterband-Abschnittes zu hoch und der Bandfilter muss vorgeschoben werden. Liegt der Druckabfall aber etwa unter einem unteren Grenzwert, so ist dies ein Hinweis auf ein Leck im Bandfilter oder im Gehäusebereich zwischen dem Filterband und dem Hauptfilter. Beim Erkennen eines Leckes ermöglicht die Vorschubsteuerung etwa das Einschalten eines Alarmes und/oder über eine Verbindung mit der Hauptsteuerung das Ausschalten der Entstaubungsanlage, bzw. des Gebläses.

In einer bevorzugten Ausführungsform ist das Filterband im wesentlichen aus Glasfasern aufgebaut, welche durch ein Bindemittel, etwa ein Kunstharzbindemittel, so miteinander verbunden sind, dass eine hohe Kompressibilität erreicht wird und gegebenenfalls die Filterband-Dichte in Richtung des Luftstromes zunimmt und insbesondere die Glasfasern in Richtung des Luftstromes dünner werden, wobei etwa ein Faserdurchmesser im Bereich von 20 - 40 Micron vorgesehen ist. Das Filterband des Vorfilters hält im wesentlichen alle Staubteilchen mit einer dreidimensionalen Ausdehnungen, die über einem Grenzdurchmesser liegen, zurück. Die Ausbildung des Filterbandes wird vorzugsweise so gewählt, dass ein grosser Teil des gesamten Grössenspektrums der Staubteilchen zurückgehalten wird. Dabei muss aber beachtet werden, dass der Filterwiderstand nicht zu hoch wird, bzw. der Luftdurchsatz bei einer vorgegebenen Gebläseleistung genügend gross bleibt.

Mit dem verwendeten Filtermaterial wurde bei Staubzusammensetzungen, wie sie bei Arbeiten in Eisenbahntunnels auftreten, ein Rückhaltevermögen des Vorfilters bis zu einem Bereich von mindestens 90% bis 95% erreicht. Entsprechend wurde dem Hauptfilter nur ein Feinststaub-Anteil von weniger als 10% zugeführt. Dank des guten Rückhaltevermögens des Vorfilters wird die Lebensdauer des Hauptfilters stark erhöht.

Die Zeichnungen erläutern die Erfindung anhand einer Ausführungsform, auf welche die Erfindung aber nicht eingeschränkt ist.
- Fig. 1:: Seitenansicht eines Eisenbahnwagens mit einer Entstaubungsanlage bestehend aus Vorfilter, Hauptfilter, Gebläse und Druckluftvorrichtung
- Fig. 2:: Horizontaler Schnitt durch den oberen Endbereich des Vorfilters, des Hauptfilters und des Gebläses
- Fig. 3:: Vertikaler Schnitt durch den Vorfilter und zwei Kammern des Hauptfilters

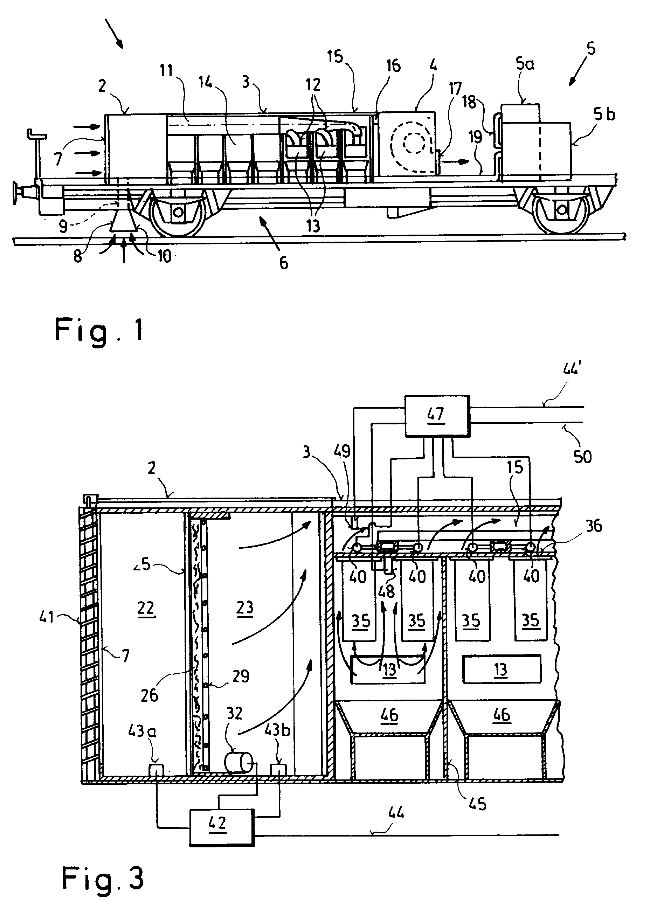

Figur 1 zeigt eine Entstaubungsanlage 1 bestehend auf einem Vorfilter 2, einem Hauptfilter 3, einem Gebläse 4 und einer Druckluftvorrichtung 5. Die Entstaubungsanlage ist auf einem Bahnwagen 6 aufgebaut und hat insgesamt eine kleine Bauhöhe, so dass der Bahnwagen 6 in einen Geleisebauzug unter die Förderbänder passt und direkt an den Bearbeitungswagen angehängt werden kann. Der im Bereich des Arbeitswagens entstehende Staub wird durch mindestens eine frontseitige Ansaugöffnung 7 und/oder durch eine nach unten, gegebenenfalls aber seitlich oder nach oben, gerichtete Ansaugvorrichtung 8 in den Vorfilter 2 gesaugt. Die Ansaugvorrichtung 8 besteht vorzugsweise aus mindestens einem vom Vorfilter nach unten führenden Stutzen 9 an dessen unterem Ende ein sich aufweitendes Ansaugelement 10 vorgesehen ist. Gegebenenfalls wird etwa ein Schlauch an einem Stutzen 9 angeschlossen, mit dessen freien Ende punktuell, etwa direkt bei einer Bohrvorrichtung, der entstehende Staub abgesaugt werden kann.

Vom Vorfilter 2 gelangt die vorgereinigte Luft durch mindestens eine, vorzugsweise aber zwei seitlich entlang des oberen Endbereiches des Hauptfilters führende, Verbindungsleitungen 11 und durch nach unten abzweigende Anschlussleitungen 12 in Ansaugbereiche 13 von Hauptfilterzellen 14. In den Hauptfilterzellen 14 sind zwischen den Ansaugbereichen 13 und mindestens einem oben an die Filterzellen 14 anschliessenden Reinluftkanal 15 Patronenfilter so in einer Trennwand angeordnet, dass die Luft nur durch diese Patronenfilter in den Reinluftkanal 15 gelangen kann. Anstelle der Patronenfilter können andere Filterelemente, die Feinstaub zurückhalten, wie etwa Filtertaschen, Filterkerzen oder feinstporige Filterfolien, verwendet werden. Zum Verbinden des mindestens einen Reinluftkanals 15 mit der Saugseite des Sauggebläses 4 ist mindestens eine Reinluftverbindung 16 vorgesehen. Die Reinluft tritt aus der Entstaubungsanlage 1, bzw. aus dem Gebläse 4, durch eine Gebläse-Austrittsöffnung 17 aus.

Die Druckluftvorrichtung 5 wird zur gegebenenfalls gewünschten Abreinigung der Filterelemente des Hauptfilters benötigt und besteht vorzugsweise aus eimem Kompressor 5a, gegebenenfalls einem Kältetrockner, und aus einem Druckluftspeicher 5b, der über eine Speiseleitung 18 vom Kompressor, insbesondere über den Kältetrockner, gespiesen wird. Vom Druckluftspeicher führt eine Druckleitung 19 zu Abreinigungsdüsen, die im Bereich des Reinluftkanales den Filterelementen zugeordnet sind. Der Kältetrockner entzieht der vom Kompressor angesaugten und komprimierten Luft die Feuchtigkeit, so dass diese trockene Druckluft beim Abreinigen der Filterelemente nicht zu Verpappung des zurückgehaltenen Feinststaubes führt. Diese Lufttrocknung ist zweckmässig, weil die Feuchtigkeits- und Temperaturverhältnisse in Tunnels und ausserhalb von Tunnels sehr variabel sind.

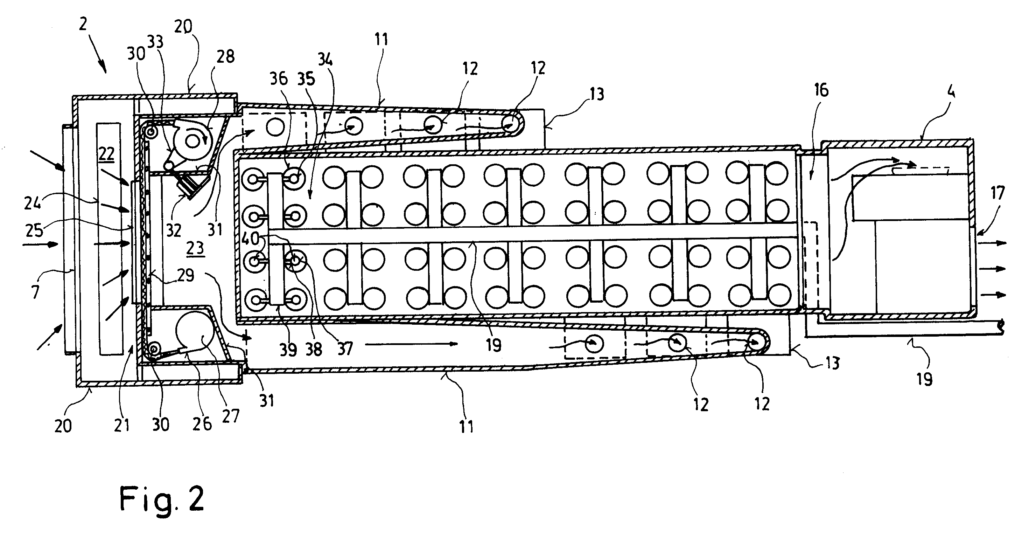

Fig. 2 zeigt eine Ausführungsform bei der der Vorfilter 2 aus einem Gehäuse 20 und einem im Gehäuseinneren angeordneten Bandfilter 21 besteht, wobei der Bandfilter so im Gehäuse 20 angeordnet ist, dass dieses in einen Anströmbereich 22, bzw. Vorraum 22, und einen Wegströmbereich 23, bzw. Weiterführungsraum 23, unterteilt wird. In den Anströmbereich 22 gelangt die Schmutzluft durch die mindestens eine Ansaugöffnung 7 und/oder die Ansaugvorrichtung 8, die über mindestens eine Anschlussöffnung 24 mit dem Ansaugbereich 24 verbunden ist. Eine Durchtrittsöffnung 25 vom Ansaugbereich 22 zum Wegströmbereich 23 wird vollständig abgedeckt durch einen momentan aktiven Abschnitt eines Filterbandes 26, das von einer Vorratsrolle 27 dicht entlang der Durchtrittsöffnung 25 zu einer Aufnahmerolle 28 führt. Zumindest im Bereich der Durchtrittsöffnung 25 ist direkt an das Filterband 26 anliegend auf der Wegströmseite desselben eine luftdurchlässige Stützstruktur 29 vorgesehen, welche die vom Luftstrom auf das Filterband wirkenden Kräfte zumindest teilweise aufnimmt. Zur Umlenkung des Filterbandes 26 sind beidseits der Durchtrittsöffnung 25 Umlenkrollen 30 vorgesehen. In einer bevorzugten Ausführungsform sind die Drehachsen der Umlenkrollen und der Vorrats- sowie der Aufnahmerolle im wesentlichen vertikal ausgerichtet. Um alle Rollen vom mittels Pfeilen angedeuteten Luftstrom abzugrenzen, sind gegebenenfalls Rollengehäuse 31 vorgesehen. Um das Filterband 26 quer zum Luftstrom zu verschieben, ist vorzugsweise ein Antriebsmotor 32 mit einer auf die Aufnahmerolle 28 wirkenden Übertragungsvorrichtung 33 vorgesehen.

Vom Wegströmbereich 23 gelangt die vorgereinigte Luft beidseits oben in die Verbindungsleitungen 11 und durch die nach unten abzweigenden Anschlussleitungen 12 in die Eintrittsbereiche 13 der Hauptfilterzellen 14. Der Horizontalschnitt gemäss Fig. 2 liegt über der horizontalen Trennwand 34 im Reinluftkanal 15. Um den Reinluftkanal 15 mit dem Innern der Patronenfilter 35 zu verbinden sind in der Trennwand 34, vorzugsweise runde, FilterAnschlussöffnungen 36 vorgesehen, an welche die Filterpatronen mit ihrem oberen Rand dicht anschliessen. Die Luft kann von den Hauptfilterzellen 14 nur durch die Patronenfilter 35 und die Öffnungen 36 in den Reinluftkanal 15 gelangen. Zum Verbinden des mindestens einen Reinluftkanals 15 mit der Saugseite des Sauggebläses 4 ist die Reinluftverbindung 16 vorgesehen. Die Reinluft tritt aus der Entstaubungsanlage 1, bzw. aus dem Gebläse 4, durch die Gebläse-Austrittsöffnung 17 aus.

Zum Abreinigen der Filterelemente 35 des Hauptfilters 3 sind vom Reinluftkanal 15 durch die Öffnungen 36 in die Filterpatronen gerichtete Druckluft-Austrittsköpfe 37 mit betätigbaren Ventilen 40 über Leitungsendstücke 38 mit Lufttanks 39 verbunden. Jeder Lufttank 39 ist an der Haupt-Druckleitung 19 angeschlossen. Die Haupt-Druckleitung 19 ist mit dem Druckluftspeicher 5b verbunden.

Fig. 3 zeigt den Vorfilter 22 mit dem Ansaugbereich 22 und dem Wegströmbereich 23 zwischen welchen Bereichen die Durchtrittsöffnung 25 der momentan aktive Abschnitt des Filterbandes 26 und die Stützstruktur 29 angeordnet ist. Die Ansaugöffnung 7 ist mit einem Lamellensystem 41 zum Schliessen und Öffnen, das auch als Wetterschutz dient, versehen. Eine Filterband-Vorschubsteuerung 42 ist mit je einem Drucksensor 43a und 43b in den Bereichen 22 und 23 verbunden. Bei zu hohen Druckdifferenzen zwischen den beiden Sensoren 43a und 43b wird der Antrieb 32 durch die Steuerung 42 so lange eingeschaltet, bis ein unverschmutzter Abschnitt des Filterbandes 26 an die Öffnung 25 anschliesst. Ist die Druckdifferenz jedoch zu klein so wird gegebenenfalls das Gebläse von der Steuerung 42 über eine erste Kontrollleitung 44 ausgeschaltet.

Fig. 3 gibt einen guten Einblick in einen bevorzugten Aufbau des Hauptfilters 3. Die vorgereinigte Luft gelangt von den Eintrittsbereichen 13 der durch Trennwände 45 voneinander getrennten Hauptfilterzellen 14 durch die Filterpatronen 35 und die Öffnungen 36 in den Reinluftraum 15. Der in den Hauptfilterzellen 14 zurückbleibende Feinstaub kann sich in Sammeltrichtern 46 sammeln. Staub, der an den Filterpatronen 35 haftet, wird mittels Druckluft abgereinigt. Die Druckluft wird über die Leitungen 19, 39 und 38 den Filterpatronen auf der Reinluftseite zugeführt. Zur Steuerung des Abreinigens ist eine Abreinigungssteuerung 47 mit den Ventilen 40 verbunden. Die zur Reinigung nötigen Druckstösse können in vorgegebenen Zeitabschnitten durch das nacheinander erfolgende Öffnen von Ventilen 40 erzeugt werden.

Gegebenenfalls werden die Reinigungsstösse auch beim Erreichen eines vorgegebenen Verstopfungsgrades erzeugt. Dazu ist mindestens ein Hauptfilter-Drucksensor 48 im Innern mindestens einer Hauptfilterzelle 14 angeordnet und mit der Steuerung 47 verbunden. Vorzugsweise ist auch mindestens ein Reinluft-Drucksensor 49 im Reinluftraum 15 angeordnet, so dass eine Differenzdruck-Bestimmung über mindestens eine Filterpatrone möglich wird. Die Steuerung 47 ist mit den Drucksensoren 47 und 48 verbunden und löst etwa bei einer zu grossen Druckdifferenz einen Abreinigungsvorgang aus. Bei zu kleiner Druckdifferenz kann die Steuerung 47 etwa das Gebläse 4 über eine zweite Kontrollleitung 44' ausschalten. Gegebenenfalls ist die Steuerung 47 mit der Druckluftvorrichtung 5 über eine Mess- und/oder Steuerverbindung 50 verbunden um etwa den Kompressor 5a ein- und auszuschalten und/oder den Abreinigungsvorgang erst einzuleiten, wenn im Druckluftspeicher 5b der nötige Druck aufgebaut ist.

## Patentansprüche

1. Entstaubungsanlage für zumindest teilweise abgeschlossene Arbeitsbereiche, wie Tunnels oder Arbeitsräume, in denen beim Durchführen von Arbeitsschritten Staub in die Luft gelangt, welche Entstaubungsanlage mindestens einen Hauptfilter (3), der Staub zurückhält, und ein Gebläse (4), das die Schmutzluft durch den Hauptfilter (3) bewegt, umfasst, **dadurch gekennzeichnet**, dass im Luftstrom vor dem Eintritt in den Hauptfilter (3) ein Bandfilter (21) zum Zurückhalten von Staub vorgesehen ist, der ein langes Filterband (26) quer zum Luftstrom durch diesen vorschiebbar macht.

2. Entstaubungsanlage nach Anspruch 1, dadurch gekennzeichnet, dass
a) der Bandfilter (21) eine Vorratsrolle (27) und eine Aufnahmerolle (28) umfasst, wobei das Filterband (26) von der Vorratsrolle (27) abzuwickeln und auf die Aufnahmerolle (28) aufzuwickeln ist und dazu mindestens ein, die Aufnahmerolle (28) antreibender, Antrieb (32) vorgesehen ist, und/oder
b) das Filterband (26) Glasfasern umfasst, welche durch ein Bindemittel, vorzugsweise ein Kunstharzbindemittel, etwa so aneinander gebunden sind, dass eine hohe Kompressibilität erreicht wird und gegebenenfalls die Filterband-Dichte in Richtung des Luftstromes zunimmt und insbesondere die Glasfasern in Richtung des Luftstromes dünner werden, wobei etwa Faserdurchmesser im Bereich von 20 - 40 Micron vorgesehen sind.

3. Entstaubungsanlage nach Anspruch 2, dadurch gekennzeichnet, dass zur Steuerung des Antriebes (32) eine Filterband-Vorschubsteuerung (42) vorgesehen ist, die das Filterband (26)
a) kontinuierlich oder,
b) schubweise in vorgegebenen Zeitabschnitten, vorzugsweise aber jeweils beim Erreichen eines vorgegebenen Verstopfungsgrades um eine Länge, die im wesentlichen der Ausdehnung des Luftstromes in der Längsrichtung des Filterbandes (26) entspricht,
vorschiebbar macht.

4. Entstaubungsanlage nach Anspruch 3, dadurch gekennzeichnet, dass die Filterband-Vorschubsteuerung (42)
a) mit mindestens einem Drucksensor (43a,43b), vorzugsweise einem Differenzdruck-Sensor, verbunden ist, welcher Sensor eine Grösse bestimmbar macht, die vom Druckabfall über das Filterband (26) abhängt, und gegebenenfalls
b) eine Vergleichsstufe umfasst, die den vom Sensor bestimmten Wert mit mindestens einem vorgegebenen Wert vergleichbar macht um etwa bei einem über einem oberen Grenzwert liegenden Druckabfall das Vorschieben des Filterbandes (26) auszulösen, oder aber um bei einem unter einem unteren Grenzwert liegenden Druckabfall einen Alarm und/oder eine Abschaltung der Entstaubungsbetriebes auszulösen.

5. Entstaubungsanlage nach einem der Ansprüche 1 bis 4, dadurch gekennzeichnet, dass zumindest auf der dem Hauptfilter (3) zugewandten Seite des Filterbandes (26) mindestens im Bereich des Luftstromes eine luftdurchlässige Stützstruktur (29) vorgesehen ist, gegen die das Filterband (26) vom Luftstrom drückbar ist.

6. Entstaubungsanlage nach einem der Ansprüche 1 bis 5, dadurch gekennzeichnet, dass der Bandfilter (26) einen Vorfilterraum in einen Vorraum (22) und einen Weiterführungsraum (23) unterteilt, wobei die Luft vom Vorraum (22) nur durch das Filterband (26) in den Weiterführungsraum (23) gelangt und
a) im Vorraum (22) mindestens eine Ansaugöffnung (7,8), vorzugsweise in der dem Filterband (26) gegenüberliegend Frontwand und/oder in einer quer zur Frontwand verlaufenden Wand vorgesehen ist, wobei bei mehreren Ansaugöffnungen (7,8) gegebenenfalls Verschliessvorrichtungen (41) den Öffnungen (7,8) zugeordnet sind, und
b) vom Weiterführungsraum (23) mindestens ein Verbindungskanal (11) zum Hauptfilter (3) führt.

7. Entstaubungsanlage nach einem der Ansprüche 1 bis 6, dadurch gekennzeichnet, dass der Hauptfilter (3) Filterelemente (35) umfasst, die in den Durchgängen von mindestens einem, mit mindestens einem Verbindungsraum (13) verbundenen, Schmutzraum zu mindestens einem Reinluftraum (15) angeordnet sind und dass mindestens ein am Reiluftraum (15) angeschlossenes Sauggebläse (4) die zu reinigende Luft durch den Bandfilter (21) und den Hauptfilter (3) bewegbar macht.

8. Entstaubungsanlage nach Anspruch 7, dadurch gekennzeichnet, dass zum Abreinigen der Filterelemente (35) eine pneumatische Rückstossvorrichtung (5,19,37-40) vorgesehen ist, die Luft von einer Druckluftquelle (5) durch Öffnen und Schliessen von Ventilen (40) intervallweise auf der Reinluftseite (15) in die Filterelemente (35) einpressbar macht.

9. Entstaubungsanlage nach Anspruch 8, dadurch gekennzeichnet, dass eine Abreinigungssteuerung (47) gegebenenfalls mit mindestens einem Drucksensor (48,49), insbesondere mindestens einem Differenzdrucksensor, vorgesehen ist, welche Abreinigungssteuerung (47)
a) mittels einer Zeitschaltung in vorgegebenen Zeitabschnitten Reinigungs-Druckstösse, und/oder
b) mittels einer Vergleichsstufe jeweils beim Erreichen eines vorgegebenen Verstopfungsgrades, bzw. eines Differenzdruckes, Reinigungs-Druckstösse oder einen Alarm und/oder eine Abschaltung der Entstaubungsbetriebes
auslösbar macht.
